Europäisches Patentamt

European Patent Office

Office européen des brevets

(11) Veröffentlichungsnummer: **0 446 627 A2**

(12) **EUROPÄISCHE PATENTANMELDUNG**

(21) Anmeldenummer: 91101897.6

(22) Anmeldetag: 11.02.91

(51) Int. Cl.5: **F16M 13/02**

(30) Priorität: 16.03.90 DE 4008557

(43) Veröffentlichungstag der Anmeldung:
18.09.91 Patentblatt 91/38

(84) Benannte Vertragsstaaten:
AT BE CH DE DK ES FR GB IT LI NL SE

(71) Anmelder: Kreuzer GmbH + Co. OHG
Benzstrasse 26
W-8039 Puchheim(DE)

(72) Erfinder: Kreuzer, Friedhelm
Frihindorstrasse 1a
W-8000 München 60(DE)
Erfinder: Röder, Heinrich
Elisabethweg 5
W-8045 Ismaning(DE)

(74) Vertreter: Prüfer, Lutz H., Dipl.-Phys.
Harthauser Strasse 25d
W-8000 München 90(DE)

(54) Halteelement zum Befestigen auf einer Unterlage.

(57) Es wird ein Halteelement (1) zum Befestigen auf einer Unterlage geschaffen. Das Halteelement weist ein erstes Teil (2) mit zwei im wesentlichen rechteckig zueinander angeordneten Schenkeln (4, 5) auf. Es ist wenigstens eine Bohrung (7, 8) und ein sich um diese herum erstreckender und nach einer Seite (12) hervorstehender Ansatz (13) vorgesehen. Das Halteelement ist nicht nur einfach herstellbar, sondern auch universell zum Verhindern des Verrutschens von Gegenständen auf Tischen und Platten einsetzbar.

Fig. 2

EP 0 446 627 A2

Die Erfindung betrifft ein Halteelement zum Befestigen auf einer Unterlage. Derertige Halteelemente werden auf Unterlagen angebracht, damit die Bewegung von auf der Unterlage stehenden Gegenständen durch sie begrenzt wird.

Es ist allgemein bekannt, zum Vermeiden des Hin- und Herrutschens von Gegenständen, beispielsweise Meßgeräten und insbesondere Meßgeräten im medizinischen Bereich, Halteelemente auf der Tragplatte anzuschrauben oder festzukleben.

Aufgabe der Erfindung ist es, ein solches Halteelement zu schaffen, welches leicht herstellbar und einfach anbringbar ist und welches so ausgebildet ist, daß es im montierten Zustand eine glatte Oberfläche aufweist, die leicht saubergehalten werden kann, was insbesondere im medizinischen Bereich wichtig ist. Außerdem ist das Halteelement so ausgebildet, daß seine Höhe durch Kombination mehrerer Teile den Erfordernissen angepaßt werden kann. Beispielsweise benötigen relativ leichte Geräte etc. auf Oberflächen, die beim Transport etc. eventuell gekippt oder erschüttert werden, normalerweise höhere Halteelemente.

Diese Aufgabe wird durch das im Patentanspruch 1 gekennzeichnete Halteelement gelöst.

Weiterbildungen der Erfindung sind in den Unteransprüchen gekennzeichnet.

Weitere Merkmale und Zweckmäßigkeiten ergeben sich aus der Beschreibung von Ausführungsbeispielen anhand der Figuren. Von den Figuren zeigen:

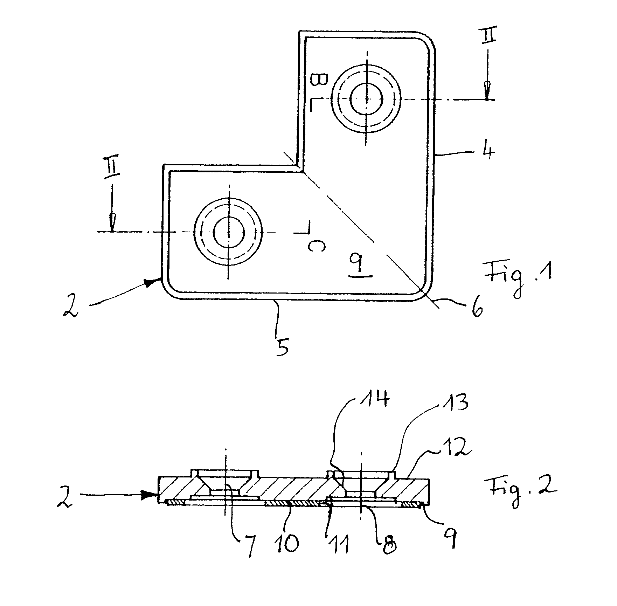

Fig. 1    eine Draufsicht auf ein erstes Teil von oben;

Fig. 2    einen Schnitt entlang der Linie II-II in Fig. 1;

Fig. 3    eine Draufsicht auf ein zweites Teil von oben;

Fig. 4    einen Schnitt entlang der Linie V-V in Fig. 5;

Fig. 5    eine Draufsicht auf ein zweites Teil von unten;

Fig. 6    eine perspektivische Ansicht auf ein erstes Teil von oben;

Fig. 7    eine perspektivische Ansicht auf ein zweites Teil von oben;

Fig. 8    eine perspektivische Ansicht des aus erstem und zweitem Teil zusammengesetzten Halteelementes.

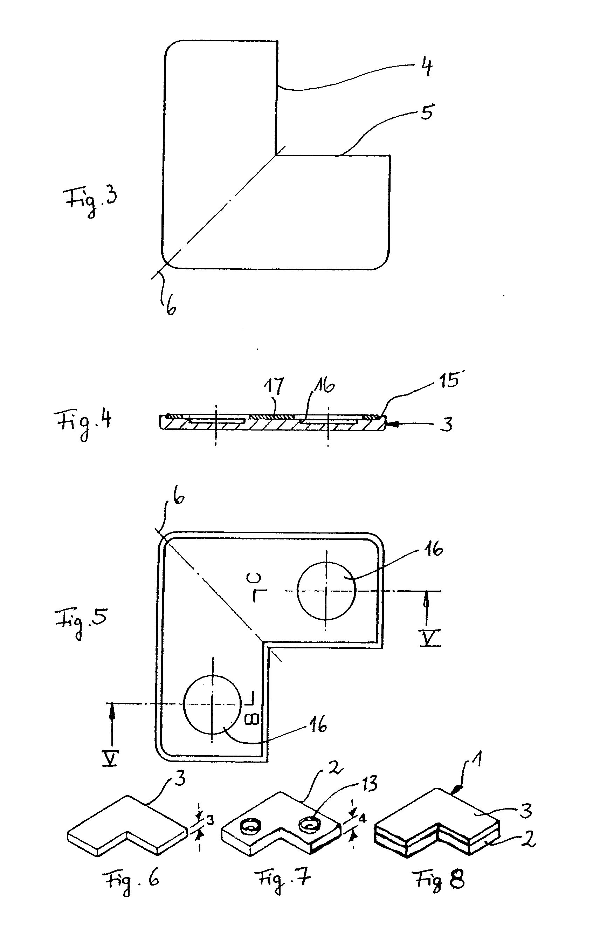

Das Halteteil ist aus einem ersten Teil 2 oder einem zweiten Teil 3 gebildet. Bei der in Fig. 8 gezeigten Ausführungsform weist das Halteelement 1 ein erstes Teil 2 und ein zweites Teil 3 auf. Jedes Teil ist aus zwei einstückig miteinander verbundenen flachen Schenkeln gebildet, die rechtekkig zueinander und spiegelsymmetrisch zu einer Symmetrieachse 6 ausgebildet sind. Die beiden Teile sind zueinander kongruent.

Das erste Teil 2 weist zwei zur Symmetriechse 6 spiegelsymmetrisch angeordnete Bohrungen 7, 8 zur Aufnahme von Befestigungsschrauben auf. Auf der unteren Seite 9 des ersten Teiles ist ein selbstklebender Streifen 10 aufgebracht, der durch einen abziehbaren Schutzstreifen gegen unbeabsichtigtes Verkleben geschützt ist. Auf dieser unteren Seite ist koaxial zu den Bohrungen jeweils eine Ausnehmung 11 vorgesehen. Auf der gegenüberliegenden oberen Seite 12 des ersten Teiles ist koaxial zu jeder Bohrung ein dazu zylindrisch ausgebildeter Ansatz 13 vorgesehen. In diesem ist eine Senkbohrung 14 zum Aufnehmen des Kopfes der in die Bohrung einzuführenden Befestigungsschraube vorhanden. Der äußere Durchmesser des Ansatzes 13 ist so groß gewählt, daß der Ansatz 13 in eine Ausnehmung 11 eines entsprechenden ersten Teiles gerade eingeführt werden könnte, so daß ein Hin- und Herrutschen solcher zweier erster Teile gegeneinander ausgeschlossen ist.

Das zweite Teil 3 weist an seiner der Unterseite 9 entsprechenden Unterseite 15 den in den Abmessungen den Ausnehmungen 11 entsprechende Ausnehmungen 16 auf. Die Ausnehmungen sind an der gleichen Stelle symmetrisch zur Symmetrieachse 6 angeordnet wie die Bohrungen und Ausnehmungen im ersten Teil. Auf der Unterseite 15 ist ebenfalls ein selbstklebender Streifen 17 vorgesehen, der wiederum gegen unbeabsichtigtes Verkleben durch einen abziehbaren Schutzstreifen geschützt ist. Die Streifen 10 und 17 weisen an den den Ausnehmungen entsprechenden Stellen jeweils Durchbrechungen auf.

Die Teile sind vorzugsweise jeweils aus Kunststoff gespritzt.

Im Betrieb können das erste Teil und das zweite Teil für sich jeweils separat verwendet werden, indem die Teile entweder auf eine Platte geklebt werden oder indem das erste Teil auf einer solchen Platte aufgeschraubt wird.

Die Teile bieten aber auch die Möglichkeit, daß zunächst das erste Teil 2 auf eine Platte fest aufgeschraubt wird und daß darauf als Abschlußstück ein zweites Teil 3 mit seiner Unterseite 15 zum ersten Teil gerichtet nach Abziehen des Schutzstreifens aufgeklebt wird. Dadurch ergibt sich nicht nur eine größere Höhe für das Halteelement, sondern es wird auch ein sauberer Abschluß erzielt, da die Schrauben und Ansätze durch das zweite Teil sauber abgedeckt sind.

Für den Fall, daß eine noch größere Höhe des Halteelementes erforderlich ist, werden bevorzugt zwei erste Teile 2 auf der Platte verschraubt. Anschließend wird wie beim ersten Anwendungsbeispiel ein zweites Teil 3 als Abdeckung aufgeklebt. Alternativ könnte auch nur ein erstes Teil 2 festgeschraubt werden. Ein weiteres erstes Teil 2 wird dann auf das festgeschraubte erste Teil 2 aufgeklebt. Auf beide wird ein zweites Teil 3 aufgeklebt, welches dann nicht nur die Höhe vergrößert, sondern wiederum einen sauberen abdeckenden Abschluß gibt. In den Figuren 6 bis 8 sind ein erstes und ein zweites Teil 2, 3 zunächst separat und dann in Fig. 8 zusammengesetzt gezeigt.

Nach einer anderen Ausführungsform können anstelle der beiden symmetrisch angeordneten Bohrungen 7, 8 und der entsprechenden zugehörigen Ausnehmungen eine einzige auf der Symmetrieachse 6 zentrierte Bohrung und entsprechend angeordnete Ausnehmungen 11 bzw. 16 vorgesehen sein. Die Befestigung bei dieser Ausführungsform ist zwar nicht so fest wie bei der ersten Ausführungsform. Es entsteht aber die Möglichkeit, das Halteteil um die Achse der einzigen anzubringenden Schraube zum Ausrichten für das Halten eines Gegenstandes um die Schraubenachse zu schwenken.

Mit den oben beschriebenen Ausführungsformen wird erreicht, daß ein universell verwendbares Halteelement geschaffen wird, bei dem die Lagerhaltung dadurch sehr vereinfacht werden kann, daß die Teile des Halteelementes für verschiedene Zwecke in verschiedenster Weise kombiniert werden können.

## Patentansprüche

1. Halteelement (1) zum Befestigen auf einer Unterlage zur Begrenzung der seitlichen Bewegung von auf der Unterlage stehenden Gegenständen etc., bestehend aus einem ersten Teil (2) mit zwei im wesentlichen rechteckig zueinander angeordneten Schenkeln (4, 5), mit wenigstens einer Bohrung /7, 8) und einem nach einer Seite hervorstehenden Ansatz (13), und einem auf das erste Teil (2) aufzusetzenden zweiten Teil (3) mit zwei unter dem gleichen Winkel zueinander angeordneten Schenkeln, welches auf einer Seite an der jedem Ansatz (13) entsprechenden Stelle eine Ausnehmung (16) zum Aufnehmen des Ansatzes (13) aufweist, während die gegenüberliegende Fläche eine im wesentlichen glatte Oberfläche aufweist.

2. Halteelement nach Anspruch 1, dadurch gekennzeichnet, daß der Ansatz (13) eine Senkbohrung (14) zum Aufnehmen des Kopfes einer Befestigungsschraube umfaßt.

3. Halteelement nach Anspruch 1 oder 2, dadurch gekennzeichnet, daß das erste Teil (2) auf der dem Ansatz (13) gegenüberliegenden Fläche selbstklebend ausgebildet ist.

4. Halteelement nach Anspruch 3, dadurch gekennzeichnet, daß auf der dem Ansatz (13) gegenüberliegenden Fläche des ersten Teils (2) ein geschützter Selbstklebestreifen (10) vorgesehen ist.

5. Halteelement nach einem der Ansprüche 1 bis 3, dadurch gekennzeichnet, daß im ersten Teil (2) zwei Bohrungen (7, 8) vorgesehen sind, die symmetrisch zur Symmetrieachse (6) der beiden Schenkel angeordnet sind.

6. Halteelement nach einem der Ansprüche 1 bis 3, dadurch gekennzeichnet, daß die Bohrung auf der Symmetrieachse (6) der beiden Schenkel angeordnet ist.

7. Halteelement nach Anspruch 1, dadurch gekennzeichnet, daß der lichte Durchmesser der Ausnehmung (16) im zweiten Teil (3) im wesentlichen gleich dem Außendurchmesser des Ansatzes (13) am ersten Teil (2) ist, so daß beim Einstecken des Ansatzes in die Ausnehmung eine Reibung entsteht.

8. Halteelement nach einem der Ansprüche 1 bis 7, dadurch gekennzeichnet, daß das erste Teil (2) auf seiner dem Ansatz (13) gegenüberliegenden Seite eine Ausnehmung (11) zum Aufnehmen entsprechender Ansätze (13) eines anderen ersten Teiles (2) aufweist.

9. Halteelement nach Anspruch 1, dadurch gekennzeichnet, daß auf der der glatten Oberfläche des zweiten Teils (3) gegenüberliegenden Fläche ein geschützter Selbstklebestreifen (17) vorgesehen ist.

II

B

4

II

C

9

Fig. 1

2

5

6

14 13

12

2

Fig. 2

7 10 11 8 9

Fig.3

Fig.4

Fig.5

Fig. 6

Fig. 7

Fig 8